# EUROPEAN PATENT SPECIFICATION

(11) **EP 2 235 682 B1**
(45) Date of publication and mention of the grant of the patent: **03.10.2018**
(21) Application number: 08728549.0
(22) Date of filing: 30.01.2008
(51) Int. Cl.: G06T 7/00

(54) **METHODS AND SYSTEMS FOR AUTOMATICALLY ASSESSING AND REPORTING STRUCTURAL HEALTH**
VERFAHREN UND SYSTEME ZUM AUTOMATISCHEN BEWERTEN UND MELDEN DER STRUKTURELLEN INTEGRITÄT
PROCÉDÉS ET SYSTÈMES D'ÉVALUATION ET DE RAPPORT AUTOMATIQUES DE L'ÉTAT D'UNE STRUCTURE

(43) Date of publication of application: 06.10.2010
(73) Proprietor: The Boeing Company, Chicago, IL 60606-1596 (US)
(72) Inventor: MALKIN, Matthew C., Seattle, Washington 98117 (US); KEARNS, Justin D., Seattle, Washington 98117 (US)
(74) Representative: Land, Addick Adrianus Gosling
(86) International application number: PCT/US2008/052444
(87) International publication number: WO 2009/099430

(56) References cited:
- ABDUL AZIZ A ET AL: "On the material characterization of a composite using micro CT image based finite element modeling" PROCEEDINGS OF THE SPIE - THE INTERNATIONAL SOCIETY FOR OPTICAL ENGINEERING SPIE - THE INTERNATIONAL SOCIETY FOR OPTICAL ENGINEERING USA, vol. 6176, 2006, pages 617605-1-617605-8, XP002561465 ISSN: 0277-786X
- LANGER S A ET AL: "OOF: an image-based finite-element analysis of material microstructures" COMPUTING IN SCIENCE & ENGINEERING IEEE COMPUT. SOC USA, vol. 3, no. 3, May 2001 (2001-05), pages 15-23, XP002561466 ISSN: 1521-9615

## Description

### BACKGROUND OF THE DISCLOSURE

### Field of the Disclosure

The disclosure relates to methods used to assess and report structural health and, more particularly, to methods used to automatically assess and report structural health.

### Description of the Related Art

As a structure (*e.g*., an aircraft, building, truck, etc.) ages or as repairs to the structure age, non-destructive evaluation may be performed to verify the health of the structure and to confirm that the structure has sufficient remaining strength for continued operations. Structural damage data (*e.g.*, data from non-destructive evaluation) must be interpreted in order to assess the health of a structure. Present technology requires that an operator (a person) interpret this data. Errors can arise due to manual collection and interpretation of the data, leading to errors in assessment of the health of a structure.

Variability exists when data from non-destructive inspection of structural components is interpreted manually. For any given structural inspection task, the probability of detection (PoD) is affected by several factors. These factors include: 1) the skill and experience of the inspector, 2) accessibility to the structure, 3) exposure of the inspection surface, and 4) confounding attributes such as underlying structure or the presence of rivets. This variation can cause missed flaws (false negatives) and over-reported flaw sizes (false positives). One source of the variation is the manual interpretation of inspection data.

Costs associated with false negatives and false positives have the potential to be high. At present, very conservative structural design is one way of managing the uncertainty surrounding inspection data. When these concepts are applied to bonded structural repairs, allowable damage limits (flaw sizes) for bonded repairs can be tied to inspection system capabilities and made to be so conservative that the benefit of the repair is not realized.

Consequently, present structural inspections require a combination of sophisticated equipment and operator experience and knowledge to obtain an assessment of structural health. Errors in the assessment of structural health may have undesirable economic consequences.

Due in part to these consequences the "Ramp Damage Checker" (disclosed in US 2005/0279171) was developed for the airline industry. This device determines if the structure has hidden damage. However, the impact of the detected damage on the structural strength is not determined.

Other attempts at combining non-destructive inspection (NDI) data and analysis have been made. The Structural Repair of Aging Aircraft (SRAA) program provides an example of this concept. The method used by the SRAA program was to modify a structural model based on NDI data. The model modifications were performed manually by the operator aligning the NDI data with the existing structural model.

Accordingly, there is a need for a method to automatically assess and report structural health.

### BRIEF SUMMARY OF THE DISCLOSURE

The present disclosure addresses the problems identified above by providing methods to automatically assess and report structural health. Embodiments of the disclosure may advantageously reduce the costs and improve the accuracy of structural inspections and health assessments in comparison with the prior art methods.

One embodiment provides a method for analyzing a structure that includes receiving damage image data; converting the received image data into analysis data in an analyzable format; performing a structural analysis on the analysis data; and outputting the results of the structural analysis.

Another embodiment is a system for analyzing a structure that includes a computer or other processing device that is capable of analyzing a structure. The system receives damage image data; converts the received image data into analysis data in an analyzable format; performs a structural analysis on the analysis data; and outputs the results of the structural analysis.

A further embodiment provides a computer-based method for analyzing a structure. This method includes: receiving image data of a portion of the structure into a processing component; comparing the received damage image data with reference image data using the processing component; denoising the received image data based on the comparison of the received image data and the reference image data using the processing component; automatically identifying one or more anomaly boundaries from the denoised image data using the processing component; automatically creating an analysis geometry based on the identified one or more anomaly boundaries using the processing component; automatically creating an analysis mesh based on the created analysis geometry using the processing component; automatically performing finite element analysis on the created analysis mesh using the processing component; comparing the finite element analysis results with allowable results; calculating the residual strength of the structure; determining if the structure is suitable for continued service based on at least one of: the results of the finite element analysis; the results of comparing the finite element analysis results with allowable results, and the results of calculating the residual strength of the structure; and outputting the results of the determination of structural suitability for continued service.

The features, functions, and advantages that have been discussed can be achieved independently in various embodiments of the present disclosure or may be combined in yet other embodiments, further details of which can be seen with reference to the following description and drawings.

### BRIEF DESCRIPTION OF THE DRAWINGS

The accompanying drawings incorporated in and forming part of the specification illustrate several aspects of the present disclosure. In the drawings:
Figure 1 illustrates of a flow chart of one method that may be used to assess a structure.
Figure 2 illustrates one embodiment of a system that may be used to detect defects in a structure and then analyze the detected defects.
Figure 3 illustrates of a flow chart of a second method that may be used to assess a structure.
Figure 4 illustrates an exemplary image showing an elliptical defect or anomaly.
Figure 5 shows an exemplary analysis of the anomaly shown in Figure 4 with a basic displacement boundary condition and normalized material properties.
Figure 6 illustrates an exemplary image with two anomalies of different shapes that may be input for analysis.
Figure 7 shows an exemplary analysis of the anomaly shown in Figure 6.
Figure 8 illustrates one embodiment of a graph of damaged repair strength over time showing how a go/no-go determination could be made.

Reference will now be made in detail to embodiments of the disclosure, examples of which are illustrated in the accompanying drawings.

### DETAILED DESCRIPTION

Automated assessment of inspection system data has the potential to increase the probability of detection for non-destructive inspection (NDI) systems, which in turn may enable modification of allowable damage limits (flaw sizes) and thereby reduce the design weight of structures designed for damage tolerance. Automated assessment of NDI data may provide benefits to any industry that uses NDI data, for example the construction and repair of: airplanes, cars, trains, buildings, bridges, pressure vessels, ships, etc..

The potential also exists to reduce inspection costs through automated assessment of structural health. The automated assessment may be made possible (in part) by the use of in-situ sensing systems. When compared to off-board sensors, in-situ sensors are not subject to variation due to manual operation of a sensing element. Automated assessment is intended to improve over manual interpretation by improving probability of detection, reducing false positives and negatives, and decreasing costs of inspection.

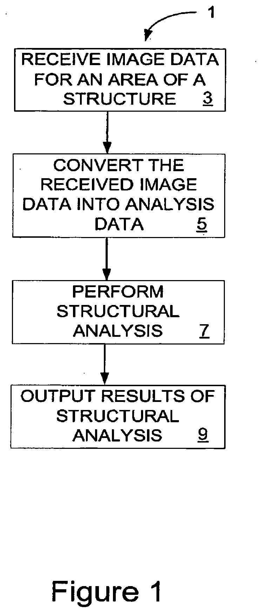

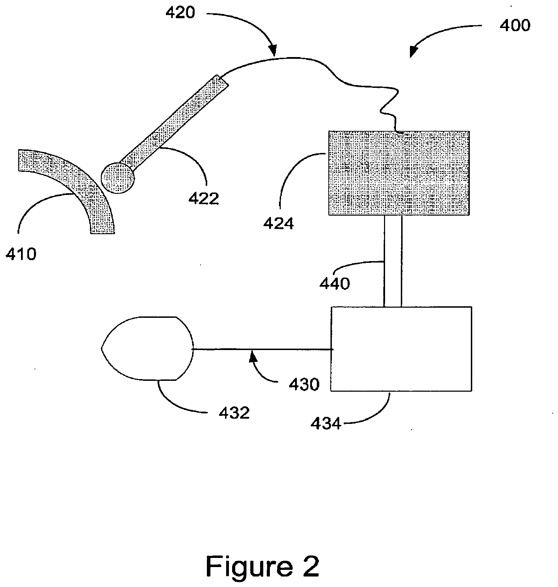

Figure 1 illustrates one embodiment of a process to determine the health of a structure 410, an example of which is shown in Figure 2. In process 1, image data for an area of structure 410 is received at block 3. The image data may be received by a structure analysis system 430 from a sensing system 420 through a dedicated or network (wired or wireless) connection 440 as illustrated in Figure 2. Alternatively, the image data may be transferred from the sensing system 420 to analysis system 430 by an operator, or by any other suitable method or means.

Data interpretation may be performed by converting image data into an analyzable format (a finite element mesh is one example of the analyzable format) at block 5. A structural analysis of the converted data may be performed at block 7. The results of the structural analysis may be output at block 9. Some embodiments may omit the data conversion (block 5) if the data input is in a form compatible with the structural analysis of block 7.

Figure 2 illustrates one embodiment of a system 400 that may be used to determine or monitor the health of the structure 410. The system 400 includes the structure analysis system 430. In some embodiments, system 400 may also include the sensing system 420.

The structure analysis system 430 may include a general purpose computer 434, as is well known in the art or developed in the future, running software. Alternatively, the analysis system 430 may be a dedicated device using software, firmware, a combination of software and firmware, etc. The analysis system 430 performs the structural analysis based on the data input and outputs the results of the structural analysis. In some embodiments, the analysis system 430 may also convert the image data received from the sensing system 420 into a format used to perform the structural analysis. In other embodiments, the sensing system 420 may output the data in a format that can be used for structural analysis without conversion.

In one embodiment, the computer 434 may be connected to a display 432. In other embodiments, the computer 434 may be connected to a printer or other output device (not shown).

Some embodiments may include a sensing system 420. The sensing system 420 typically includes a sensor 422 and an image processor 424. In some embodiments the image processor 424 may be integrated into the sensor 422. Alternatively, in other embodiments the image processor 424 may be integrated in to the analysis system 430. In further embodiments, the sensing system 420 may be integrated into the analysis system 430.

In some embodiments, the sensor 422 may be a hand-operated or hand-held sensor. The operator using the sensor may mark on the structure 410 the locations of structural defects. After determining the size and location of each defect, the operator could obtain an image and location of the defect. In one embodiment, the operator could take a picture of the area that included the defect or anomaly. In another embodiment, the position of the sensor 422 may be recorded, thus the sensing system 420 could output an image. In further embodiments, the sensor 422 may contain a plurality of sensing elements at predetermined locations on the sensor 422, thus the sensing system 420 could create an image of the area scanned.

The image would then be input into the analysis system 430. If the image were an electronic image, then the electronic image may be input into the analysis system 430. Alternatively, if the image were a paper or film image, then the image may be scanned to an electronic (analog or digital) image format for input to the analysis system 430.

In other embodiments the sensor 422 may be a robotic sensor or sensors, as are well known in the art. For example, the sensor 422 may be coupled to one or more automated scanning systems of the type generally used by the AUTOMATED ULTRASONIC SCANNING SYSTEM® (AUSS), and by the MOBILE AUTOMATED SCANNER® (MAUS), which systems are operated and commercially available from The Boeing Company of Chicago, Illinois. The robotic sensor would automatically or semi-automatically scan a desired portion of the structure 410, and provide an image of the defect that could be input into the analysis system.

In further embodiments, the sensor 422 may be one or more sensors embedded in or attached to the structure (an in-situ sensor or sensor system). The in-situ sensor or sensor system would provide an image of the defect that could be input into the analysis system.

As is well known in the art, the sensor 422 may operate in the acoustic or electro magnetic spectrum. Thus, in one embodiment, sensor 422 may be an ultrasound sensor. In other embodiments, sensor 422 may be an X-ray or microwave sensor. In further embodiments sensor 422 may be an infrared or ultraviolet sensor, or even a visible wavelength sensor.

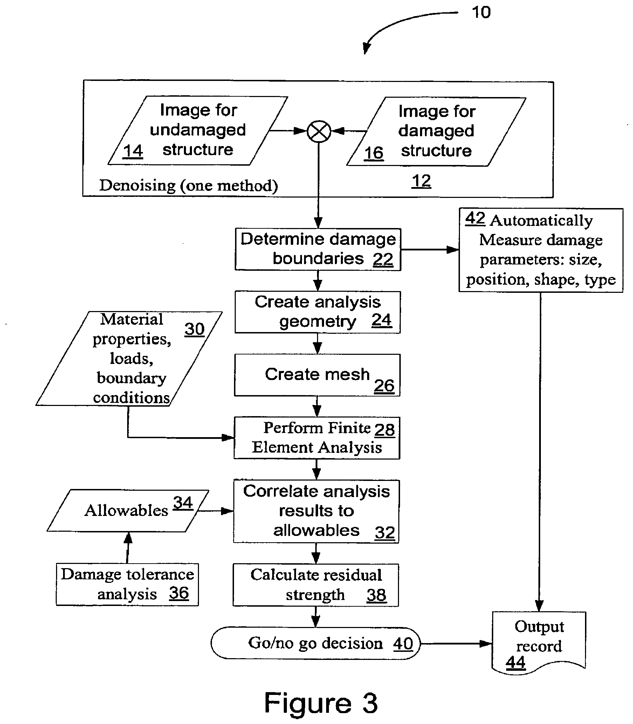

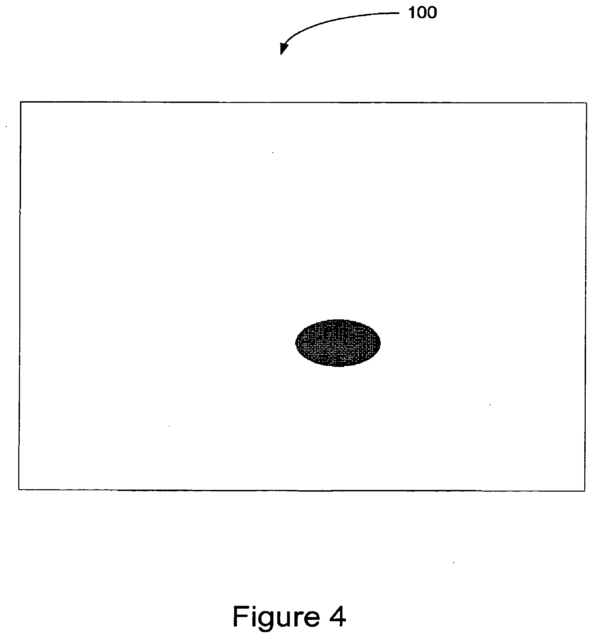

The process flow for a second embodiment 10 is shown in Figure 3. In this embodiment, the process 10 may determine structural health (residual strength) based on sensed data (images of structural damage). In one embodiment, a widely-known program known as MATLAB® (commercially available from The MathWorks, Inc. of Natick, Massachusetts) is used to process the images and calculate the residual strength value. In other embodiments, other programming environments may be used. In one embodiment, software was developed to take an image from sensors that detect defects in a structure (structural health monitoring sensors) and produce an analysis of the structure represented by that image. As a 2-dimensional example, an image of a single anomaly with an arbitrary boundary in a uniform field may represent the output of a health monitoring sensing system. A generic image 100 shown in Figure 4 is one example of image data that may be provided as an input to the process 10 illustrated in Figure 3.

In one embodiment, process 10 may be denoise the input image in optional block 12. One denoising method would compare an image with an anomaly, for example image 100 input in block 16 with another image without the anomaly input in block 14. By using both images the accuracy of the final result is improved because noise, for example rivets, fasteners, paint boundaries, etc. (areas that may show up as an anomaly, but do not reflect structural problems), is removed prior to or as part of the structural analysis.

In one embodiment, the image may be converted into data that can be used for structural analysis using blocks 22, 24, and 26. In other embodiments, this conversion may not be required.

In block 22 the damage boundaries are determined based on the input image. Based on the damage boundaries determined in block 22, an analysis geometry may be created in block 24, and the damage parameters may be measured in block 42. The damage parameters computed in block 42 may include, but are not limited to, size, position, shape or type.

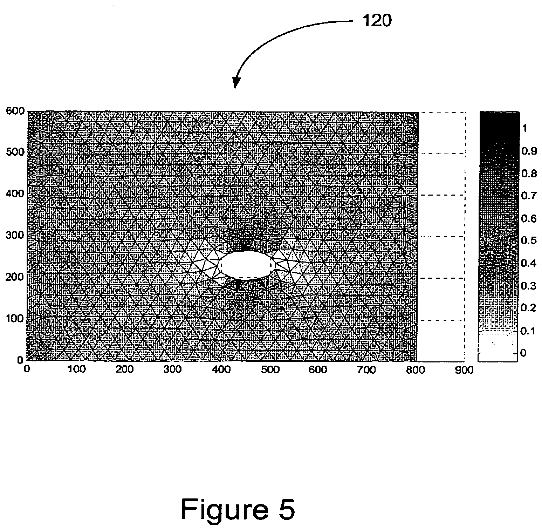

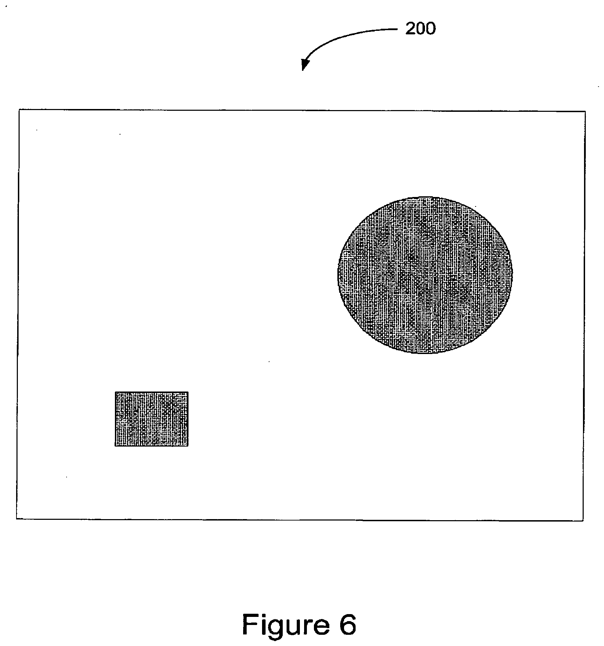

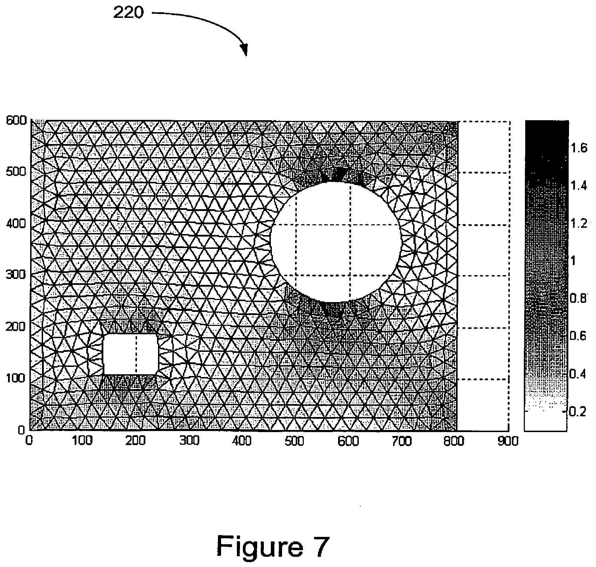

Based on the analysis geometry created in block 24, a mesh may be created in block 26. The mesh may be any geometry formed from a configuration or system of nodes interconnected with one or more lines. In some embodiments, the mesh may be a finite element mesh. One example of a finite element mesh that may be created is mesh 120 shown in Figure 5. Mesh 120 is one example of a finite element mesh that may be created based on the input of image 100 shown in Figure 4. A second example of a finite element mesh that may be created is mesh 220 shown in Figure 7. Mesh 220 is an example of a finite element mesh that may be created based on the input of image 200 shown in Figure 6. In other embodiments, the mesh may be an interconnected or intersecting configuration or system of nodes and lines used in structural analysis.

Thus, the region around the anomaly shown in the input image 100 may be automatically converted to a mesh using blocks 22, 24, and 26. Similarly, multiple anomalies as illustrated in image 200 can also be meshed in the same manner.

After the input image is prepared for analysis in blocks 22, 24, 26, a structure finite element model of the region may be created and analyzed in block 28. When the finite element model is subjected to loads and boundary condition, a strain field is produced, which can then be analyzed. If the anomalies represent damage, the analysis can be used to determine the residual strength of the structure.

In one embodiment, material properties, design or expected loads, and boundary conditions are provided in block 30 to the finite element analysis or finite element model (block 28). In other embodiments, the material properties, design or expected loads, and boundary conditions may be contained within the finite element model or analysis.

In one embodiment (not shown) the damage parameters calculated in block 42 may be input into block 28 and/or block 32.

In some embodiments the output of the finite element analysis of block 28 may be compared to or correlated with allowed damage in block 32. The allowed damage used in block 32 may be developed using a damage tolerance analysis in block 36. The output of the damage tolerance analysis may be input via an allowables input block 34 into block 32.

The comparison performed in block 32 could take a variety of forms. For example, a scalar maximum strain value could be calculated from the analysis and compared to a single allowable strain number from a design manual, a design guide, or a table created by previous test results and statistical analysis.

In some embodiments the residual strength of the structure may be calculated in block 38 based on the output of either block 32 or block 28.

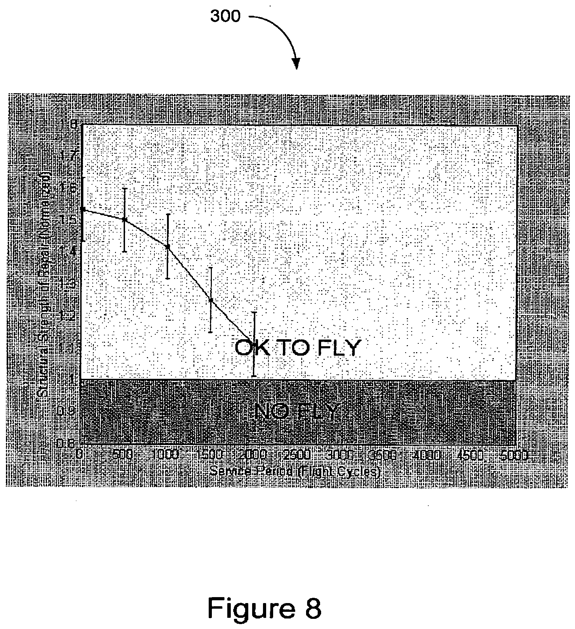

With allowable damage limits established, decisions about the health of the structure can now be made based on the relative magnitude of the pre-anomaly structure and post-anomaly stress analysis. In some embodiments a go/no go decision regarding the continued use of the structure or component may be made in block 40. As a decision aid, a graphical representation of the acceptability of the structure, and the resulting effect on future use, may be produced and output in some embodiments. Figure 8 provides graph 300 which is an example of such a graphical representation. Graph 300 is based on the needs of the aviation industry and thus plots structural strength of the repair on one axis and the number of flight cycles on the other axis. Thus, graph 300 informs the user or operator of the remaining usable life of the structure of component thereof.

Returning to Figure 3, in block 44 the results may be output. This output may include one or more of the results of the structural analysis in block 28, the correlation of block 32, the residual strength of block 38, the go/no go decision of block 40, and/or the damage parameters of block 42.

An exemplary output from the analysis may be as follows:

| A total of 2 anomaly/anomalies has/have been found. | | | |
|---|---|---|---|
| Anomaly # | Area | Centroid X | Centroid Y |
| 1 | 2.00 | 0.84 | 4.56 |
| 2 | 5.71 | 1.47 | 3.65 |

In one particular embodiment, the process 10 may be created using portions of the MATLAB®, code provided in Alberty, J., Carstensen, C., Funken, S. A., and Klose, R., "Matlab-Implementation of the Finite Element Method in Elasticity," 2000, and a mesher developed and described in Persson, P., Strang, G., "A Simple Mesh Generator in Matlab". Some of the subroutines used in the process 10 are MATLAB functions either from standard MATLAB or from MATLAB's Image processing toolbox. Meshgrid, distmesh2D, and fixmesh are subroutines that create a finite element mesh, and fem_lame2D analyzes the mesh.

In summary, numerous benefits are described which result from employing the concepts of the disclosure. The foregoing description of an exemplary embodiment of the disclosure is presented for the purposes of illustration and description. It is not intended to be exhaustive or to limit the disclosure to the precise form disclosed. Obvious modifications or variations are possible in light of the above teachings. The embodiment was selected and described in order to best illustrate the principles of the disclosure and its practical application to thereby enable one of ordinary skill in the art to best utilize the disclosure in various embodiments and with various modifications as are suited to particular uses contemplated. It is intended that the scope of the disclosure be defined by the claims appended hereto.

## Claims

1. A method for automatically analyzing a structure (410) of an airplane, car, train, building, bridge, pressure vessel or ship, comprising:
receiving damage image data (3) into a processing component;
automatically converting the received image data into analysis data (5) in an analyzable format with the processing component and without operator intervention,
performing a structural analysis (7) on the analysis data in the processing component; and
outputting the results of the structural analysis (9) from the processing component,
wherein converting the received image data into analysis data in an analyzable format comprises:
automatically identifying one or more damage boundaries from the received damage image data (3) with the processing component;
automatically creating an analysis geometry based on the identified one or more damage boundaries with the processing component; and
automatically creating an analysis mesh (26) based on the created analysis geometry with the processing component.
wherein performing the structural analysis (7) on the analysis data comprises:
performing a finite element analysis (28) on the created analysis mesh (26),
wherein performing the structural analysis (7) on the analysis data further comprises:
comparing the finite element analysis results with allowable results (32),
wherein performing the structural analysis (7) on the analysis data further comprises:
calculating a residual strength (38) of the structure (410),

2. The method of claim 1, wherein performing identifying one or more damage boundaries from the received damage image data further comprises:
measuring and outputting damage parameters (42,44),
determining if the structure (410) is suitable for continued service based on the results of calculating the residual strength (38) of the structure (410),
wherein receiving damage image data (3) further comprises:
comparing the received damage image data with undamaged image data (14); and
denoising (12) the received damaged image data based on the comparison of the received damage image data (16) and the undamaged image data (14).

3. The method of claim 1 or 2, wherein performing identifying one or more damage boundaries from the received damage image data (3) further comprises:
measuring and outputting damage parameters (42).

4. A system adapted for analyzing a structure (410) according to any of the method claims 1-3 comprising:
a receiver that receives damage image data (3) into a processing component;
a converter that automatically converts the received image data (5) into analysis data in an analyzable format,
an analyzer that automatically performs a structural analysis (7) on the analysis data; and
a display or printer configured to output the results of the structural analysis (9).

5. The system of claim 4, wherein the converter comprises:
an identifier that automatically identifies one or more damage boundaries from the received damage image data (3);
a geometry creator that automatically creates an analysis geometry based on the identified one or more damage boundaries; and
a mesher that automatically creates an analysis mesh based on the created analysis geometry.

6. The system of claim 5, wherein the analyzer further comprises:
a results comparer that compares the finite element analysis results with allowable results (32).

7. The system of claim 4, 5 or 6, wherein the analyzable format is a finite element mesh.

## Patentansprüche

1. Verfahren zur automatischen Analyse einer Struktur (410) eines Flugzeugs, eines Autos, eines Zuges, eines Gebäudes, einer Brücke, eines Druckbehälters oder eines Schiffes, wobei das Verfahren umfasst:
Empfangen von Schadensbilddaten (3) in einer Verarbeitungskomponente;
automatisches Umwandeln (5) der empfangenen Bilddaten in Analysedaten in einem analysierbaren Format mittels der Verarbeitungskomponente und ohne Bedienereingriff,
Durchführen einer strukturellen Analyse (7) an den Analysedaten in der Verarbeitungskomponente; und
Ausgeben (9) der Ergebnisse der strukturellen Analyse aus der Verarbeitungskomponente,
wobei das Umwandeln der empfangenen Bilddaten in Analysedaten in einem analysierbaren Format umfasst:
automatisches Identifizieren wenigstens einer Schadensgrenze aus den empfangenen Schadensbilddaten (3) mit der Verarbeitungskomponente;
automatisches Erzeugen einer Analysegeometrie in Bezug auf die wenigstens eine identifizierte Schadensgrenze mittels der Verarbeitungskomponente; und
automatisches Erzeugen eines Analysenetzes (26) in Bezug auf die erzeugte Analysegeometrie mittels der Verarbeitungskomponente,
wobei das Durchführen der strukturellen Analyse (7) an den Analysedaten umfasst:
Durchführen einer Analyse (28) der finiten Elemente an dem erzeugten Analysenetz (26),
wobei das Durchführen der strukturellen Analyse (7) an den Analysedaten weiterhin umfasst:
Vergleichen (32) der Ergebnisse der Analyse der finiten Elemente mit zulässigen Ergebnissen,
wobei das Durchführen der strukturellen Analyse (7) an den Analysedaten weiterhin umfasst:
Berechnen (38) einer Restfestigkeit der Struktur (410).

2. Verfahren gemäß Anspruch 1, wobei die Durchführung der Identifizierung wenigstens einer Schadensgrenze aus den empfangenen Schadensbilddaten weiterhin umfasst:
Messen und Ausgeben (42, 44) von Schadensparametern,
Bestimmen, ob die Struktur (410) für eine fortgesetzte Verwendung geeignet ist basierend auf den Ergebnissen des Berechnens (38) der Restfestigkeit der Struktur (410),
wobei das Empfangen der Bilddaten (3) weiterhin umfasst:
Vergleichen der empfangenen Schadensbilddaten mit schadensfreien Bilddaten (14); und
Entrauschen (12) der empfangenen Schadensbilddaten basierend auf dem Vergleich der empfangenen Schadensbilddaten (16) mit den schadensfreien Bilddaten (14).

3. Verfahren gemäß Anspruch 1 oder 2, wobei die Durchführung der Identifizierung wenigstens einer Schadensgrenze aus den empfangenen Schadensbilddaten (3) weiterhin umfasst:
Messen und Ausgeben (42) von Schadensparametern.

4. System, das zur Analyse einer Struktur (410) gemäß einem der Verfahrensansprüche 1 bis 3 angepasst ist, wobei das System umfasst:
eine Empfänger, der Schadensbilddaten in einer Verarbeitungskomponente empfängt (3);
einen Wandler, der die empfangenen Bilddaten automatisch in Analysedaten in einem analysierbaren Format umwandelt (5),
eine Analyseeinrichtung, die automatisch eine strukturelle Analyse an den Analysedaten durchführt (7); und
eine Anzeige oder einen Drucker, die dazu konfiguriert sind, die Ergebnisse der strukturellen Analyse auszugeben (9).

5. System gemäß Anspruch 4, wobei der Wandler umfasst:
eine Identifizierungseinrichtung, die aus den empfangenen Schadensbilddaten (3) automatisch wenigstens eine Schadensgrenze identifiziert;
eine Geometrieerzeugungseinrichtung, die in Bezug auf die identifizierte wenigstens eine Schadensgrenze automatisch eine Analysegeometrie erzeugt; und
eine Netzerzeugungseinrichtung, die in Bezug auf die erzeugte Analysegeometrie automatisch ein Analysenetz erzeugt.

6. System gemäß Anspruch 5, wobei die Analyseeinrichtung weiterhin umfasst:
eine Ergebnisvergleichseinrichtung, die die Ergebnisse der Analyse der finiten Elemente mit zulässigen Ergebnissen vergleicht (32).

7. System gemäß Anspruch 4, 5 oder 6, wobei es sich bei dem analysierbaren Format um ein Netz mit finiten Elementen handelt.

## Revendications

1. Procédé d'analyse automatique d'une structure (410) appartenant à un avion, une voiture, un train, un bâtiment, un pont, un récipient sous pression ou un navire, comprenant:
la réception de données d'image de détérioration (3) dans un composant de traitement,
la conversion automatique (5) des données d'image reçues en des données d'analyse sous un format analysable à l'aide du composant de traitement et sans intervention de l'opérateur,
la réalisation d'une analyse structurelle (7) des données d'analyse dans le composant de traitement, et
la production (9) des résultats de l'analyse structurelle par le composant de traitement;
ladite conversion des données d'image reçues en données d'analyse sous un format analysable comprenant:
l'identification automatique d'une ou plusieurs limites de détérioration à partir des données d'image de détérioration reçues (3) à l'aide du composant de traitement,
la création automatique d'une géométrie d'analyse compte tenu des une ou plusieurs limites de détérioration identifiées, à l'aide du composant de traitement, et
la création automatique d'un maillage d'analyse (26) compte tenu de la géométrie d'analyse créée, à l'aide du composant de traitement;
ladite réalisation de l'analyse structurelle (7) des données d'analyse comprenant:
la réalisation d'une analyse par éléments finis (28) du maillage d'analyse créé (26),
ladite réalisation de l'analyse structurelle (7) des données d'analyse comprenant en outre:
la comparaison (32) des résultats de l'analyse par éléments finis à des résultats admissibles;
la réalisation de l'analyse structurelle (7) des données d'analyse comprenant en outre:
le calcul d'une résistance résiduelle (38) de la structure (410).

2. Procédé selon la revendication 1, dans lequel la réalisation de l'identification d'une ou plusieurs limites de détérioration à partir des données d'image de détérioration reçues comprend en outre:
la mesure et la production (42, 44) de paramètres de détérioration,
la détermination du fait que la structure (410) est apte à continuer de fonctionner compte tenu des résultats du calcul de la résistance résiduelle (38) de la structure (410);
la réception (3) des données d'image de détérioration comprenant en outre:
la comparaison des données d'image de détérioration reçues à des données d'image de non détérioration (14), et
le débruitage (12) des données d'image de détérioration reçues compte tenu de la comparaison des données d'image de détérioration reçues (16) et des données d'image de non détérioration (14).

3. Procédé selon la revendication 1 ou 2, dans lequel la réalisation de l'identification d'une ou plusieurs limites de détérioration à partir des données d'image de détérioration reçues (3) comprend en outre:
la mesure et la production de paramètres de détérioration (42).

4. Système destiné à l'analyse d'une structure (410) selon l'une quelconque des revendications de procédé 1 à 3, comprenant:
un récepteur qui reçoit (3) des données d'image de détérioration dans un composant de traitement,
un convertisseur qui transforme automatiquement (5) les données d'image reçues en des données d'analyse sous un format analysable,
un analyseur qui réalise automatiquement (7) une analyse structurelle des données d'analyse, et
un écran ou une imprimante configuré(e) pour produire (9) les résultats de l'analyse structurelle.

5. Système selon la revendication 4, dans lequel le convertisseur comprend:
un identificateur qui identifie automatiquement une ou plusieurs limites de détérioration à partir des données d'image de détérioration reçues (3),
un créateur de géométrie qui crée automatiquement une géométrie d'analyse compte tenu des une ou plusieurs limites de détérioration identifiées, et
un dispositif de maillage qui crée automatiquement un maillage d'analyse compte tenu de la géométrie d'analyse créée.

6. Système selon la revendication 5, dans lequel l'analyseur comprend en outre:
un comparateur de résultats qui compare (32) les résultats de l'analyse par éléments finis à des résultats admissibles.

7. Système selon la revendication 4, 5 ou 6, dans lequel le format analysable est un maillage d'éléments finis.
